# EUROPEAN PATENT APPLICATION

(11) **EP 1 313 086 A1**
(43) Date of publication of application: **21.05.2003**
(21) Application number: 01947956.7
(22) Date of filing: 10.07.2001
(51) Int. Cl.: G09F 19/00, G06F 13/00, G06F 17/60, G06F 17/30

(54) **ELECTRONIC POSTER SYSTEM**

(30) Priority: 11.07.2000 JP 2000209526
(71) Applicant: Karakawa, Takashi, Urayasu-shi, Chiba 279-0011 (JP)
(72) Inventor: Karakawa, Takashi, Urayasu-shi, Chiba 279-0011 (JP); Ota, Akira, Yokohama-shi, Kanagawa 225-0022 (JP)
(74) Representative: Newstead, Michael John
(86) International application number: JP0105974
(87) International publication number: WO02005250

(57) **Abstract**

An advertising tool as an alternative to a conventional advertising form of printed matters is provided, which is capable of providing the advertising content in digital form, thereby requiring no manual hands in changing advertising contents, permitting timely attractive advertisements to be offered to the public.

Specifically numerous displays 10 are placed in different places where a lot of people gather. Each display is connected to a server 40 via an associated personal computer 20 and the network 30. The network 30 is connected to a mobile phone network 60 via a gateway 50, and mobile phones 80 can be wireless-connected to the server 40 via a selected base station 70 of the mobile phone network 60, the gateway 50 and the network 30. The personal computer 20 is connected at its display terminal to the display 10 for controlling presentations in the display 10. A touch-sensitive key entry unit 21, a bar code reader 22, a printer 23, a coin box 24, a remote control 25, a speaker 26 and a TV-and-FM receiver 27 are connected to the personal computer 20. The server 40 is composed of a distribution server section 41 for storing and distributing pieces of literal and visual information to displays 10, and a management server section 42 for storing pieces of management information and for effecting a required management. The distribution server section 41 communicates with advertising clients A1, advertisement agents A2 who represent advertising customers, and plan advertisements as required, advertisement production companies A3, contents suppliers A4 who supply the server 40 with contents at clients' expense, public organizations A5 and others, and the distribution server section 41 receives pieces of literal and visual information sent from clients and other associates for storing them in its data base.

## Description

### Technical Field:

The present invention relates to an electronic poster system including a computer-aided intelligent advertising device taking the role of conventional advertising means such as advertising boards or large printed materials, thus providing a new advertising mass media by which a variety of contents can be distributed via an associated network.

### Background Art:

Conventional advertising means includes large printed matters, numerous copies of which are applied to selected places in stations, streets and other sites where a lot of people gather.

Disadvantageously such posters involve much time and cost for designing, printing and distributing.

Also, disadvantageously it requires that a lot of hands are lent to changing posters, and a significant length of time is involved in changing posters. For these reasons it is difficult to renew posters and inform people of latest pieces of information at just the right time.

The content of the posters once applied to selected places remains unchanged for a long time, and therefore, such old posters lose their appealing and attracting capability soon.

In view of the above, one object of the present invention is to provide an advertising tool which is totally different from advertising printed matters, and is capable of providing the advertising content in digital form, thereby requiring no manual hands in changing advertising contents, permitting timely attractive advertisements to be offered to the public.

### Disclosure of the Invention:

To attain this object, an electronic poster system as claimed in claim 1 comprises: displays placed at different selected places and connected to servers for distributing a variety of contents to such selected places via an associated network; and time-division presentation control with which each of the displays is equipped for permitting a plurality of contents to be shown on the display sequentially according to a given time schedule, thereby providing an advertising mass media for showing a variety of contents to a lot of people.

In an electronic poster system as claimed in claim 2, the electronic poster system of claim 1 further comprises screen division-and-presentation means, thereby permitting the simultaneous presentation of different contents on the screen.

In an electronic poster system as claimed in claim 3, the electronic poster system of claim 1 further comprises picture-overlapping means, thereby permitting the simultaneous presentation of different contents on the screen.

In an electronic poster system as claimed in claim 4, the electronic poster system of claim 1 further comprises means for allotting selected contents to selected displays for presentation.

In an electronic poster system as claimed in claim 5, the electronic poster system of claim 1 further comprises means for permitting each of selected displays to show selected contents according to a given schedule.

In an electronic poster system as claimed in claim 6, the electronic poster system of claim 1 further comprises means for permitting any individual of the audience to have an access to any content selected by him for presentation on the screen.

In an electronic poster system as claimed in claim 7, the electronic poster system of claim 1 further comprises means for printing the content shown on the screen.

In an electronic poster system as claimed in claim 8, the electronic poster system of claim 1 further comprises means for showing the content required by any individual of the audience.

In an electronic poster system as claimed in claim 9, the electronic poster system of claim 1 further comprises means for distributing sound to the displays of the individual terminals.

In an electronic poster system as claimed in claim 10, the electronic poster system of claim 1 further comprises cost-calculating means.

### Brief Description of Drawings:

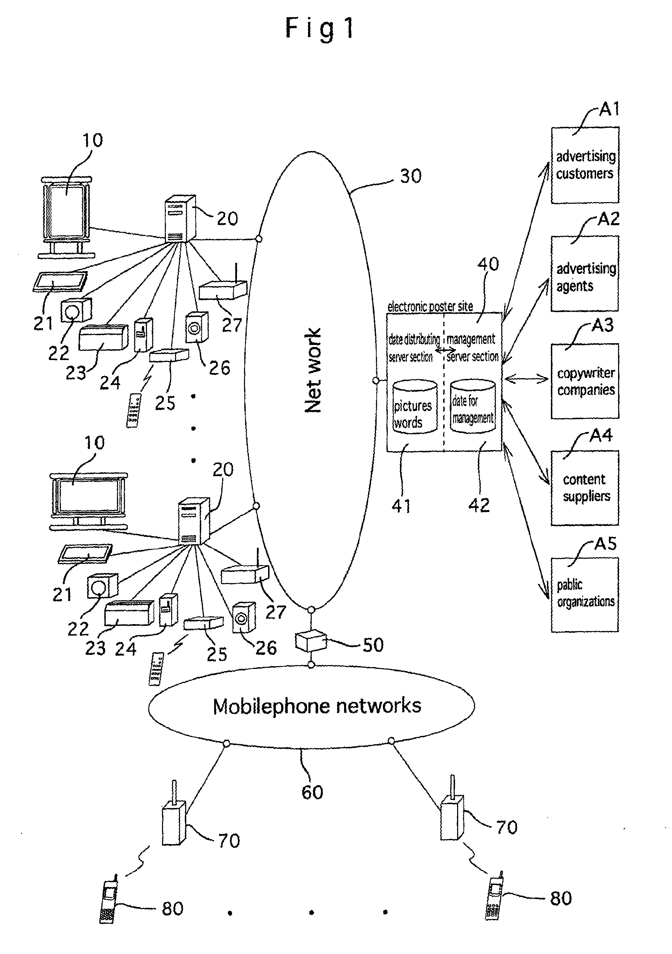

Fig.1 illustrates an electronic poster system according to one embodiment of the present invention.

### Best Mode for Carrying Out the Invention

One embodiment of the present invention is described below by referring to the sole drawing.

Referring to Fig.1, in an electronic poster system according to the present invention, displays 10 are placed at different selected places where a lot of people gather, and each display 10 is connected to a personal computer 20, which, in turn, is connected to a server 40 via an associated network 30.

Mobile phone networks 60 are connected to the server 40 via the network 30 and gateways 50, so that mobile phones 80 may be wireless-connected to the server 40.

The displays 10 may be plasma display plays (abbreviated as PDP), projectors, liquid crystal displays or LED/phosphorous tubes. Displays most appropriate for the place may be selected.

Displays are fixedly placed at selected places, but they may be borne on vehicles to be used as mobile displays.

The personal computer 20 controls presentations provided by the display 10. A touch-sensitive entry unit or keyboard 21, a bar-code reader 22, a printer 23, a coin box 24, a remote control 25, a speaker 26 and a TV-and-FM receiver 27 are connected to the computer 20.

The remote control 25 uses the IrDA or the Bluetooth technology, by which data may be transferred by means of infrared rays or by means of short-distance wireless-communication respectively, in order to remote control the displays 10.

In a case where a TV broadcasting network or an FM broadcasting network is used as the intervening network 30, the TV-and-FM receiver 27 is used.

The personal computer 20 is connected to the network 30 via its modem or adapter, and it dispatches request commands at regular intervals, requesting the server 40 to send latest revised contents to the computer 20.

The computer 20 is so designed that it may work 24 hours each and every day, monitoring electronic posters all the time, controlling the on-and-off switching of the power supply, effecting self-diagnosis and treatment as required, adding extra functions and carrying out other necessary processes.

A general-purpose personal computer may be used in addition to the personal computer 20 for exclusive use.

The network 30 includes an internet connection, a virtual private network (abbreviated as VPN) using the telephone network, a private network using lines for exclusive use (abbreviated as PN), an IP network accessible by IP addresses and a TV broadcasting network. Communication means include telephone lines, wireless circuits, CATV cables, electromagnetic waves for conveying letters and data in TV broadcasting and electromagnetic waves for FM letter multi-broadcasting.

The server 40 is composed of a data-distributing server section 41 which stores pictures and words and letters to supply displays 10 with such data or contents, and a management server section 42 which stores data for management to permit the management of the whole system.

The data-distributing server section 41 cooperates with advertising clients A1, advertisement agents A2, advertisement production companies A3, content suppliers A4, public organizations AS and other associates, and the data-distributing server section 41 stores pictures and literal data which are sent by means of file-transferring protocols (abbreviated as FTP), electric mail and the likes in its data base.

Alternatively a portal site may be provided for permitting the direct link with the home page of each site.

The management server section 42 works as follows:
The power-supply managing function permits remote control of the display 10 and the personal computer 20 in terms of their power supplies turning on and off, and of their starting, stopping and resetting. Infrared sensors may be used so that the management server section may be responsive to absence of persons around the display for turning its power supply off, and responsive to presence of persons for turning its power supply on.
The working monitoring function permits the watching of the display's working with the aid of an associated monitor screen.
The call center connecting function permits required connections between individual users and the call center via telephones or e-mails.
The mobile phone connecting service function permits mobile phones to be supplied with the operation menus pertaining to the electronic poster.
The schedule management function permits separate management of each display 10 in terms of its contents and schedule. Thus, different displays can show different contents appropriate for the regionality of each place, extending or shortening the length of time for presentation, dependent on the time zone within which such contents are given.
The content watching function permits the preview of the content to be shown on a selected display 10.
The copyright managing function determines the frequency at which presentation is made of the material which is protected by the copyright.
The reservation management function permits presentation of vacancies available in the electronic poster on the home page, inducing advertising clients A1 to reserve any vacant site.
The content distribution function effects distribution of copies of selected contents at individual requests via facsimile or printers, or distribution of sound or images to mobile phones also at individual requests.
The clients' content presentation function permits presentation of contents received from the clients on a display 10 selected by the client.
The log function permits collection of account/distribution/presentation logs, determining the outstanding amount on debit side and realizing the present working condition of the electronic poster.

The sound replying function permits oral replies to individual users, informing them of guidance or message.

The audience rating function effects detection of presence of individuals around the display 10 by using sensors appropriate for the purpose, thereby determining how many people stay there for how long period of time.

Thus, the electronic poster system according to the present invention offers a variety of services, such as an activity promotion service to companies, an information presentation service to individuals, an extra information presentation service to authorized members, a private utility service to authorized members or an advertisement support service for public organizations.

The activity promotion service includes presentation of advertisement pictures of contractor companies according to the schedule in which the length of period, the time zone, the length of time per each presentation and such like are predetermined for advertisement at places selected by the clients.

The contract term can be set in terms of seasons, months, weeks or days, and the advertisement fee is dependent on which places and time zones are selected and how long each presentation continues. These factors are determined by advertisement agents A2.

Extra advertisement income may come from banner advertisements which can be presented on the displays or directly attached to the body of the displays.

There are two different advertisement modes, that is, presentation of advertising pictures according to a predetermined schedule and presentation of advertising pictures at individual requests.

As for the latter direct access to the server, an individual user operates the data entry unit 21, the remote control unit 25, the mobile phone 80 and such like to input the identification numbers of the display 10 and the pieces of information which he wants to see.

Alternatively an individual user may print the bar code on one copy of cards or pamphlets, which are put in the vicinity of the display 10, and then, the individual user puts the printed card or pamphlet in the barcode reader 22, thereby indicating the identification numbers of the display and the required piece of information.

The electronic poster system is capable of self-learning in modifying the manner of advertisement in favor of a particular client whose advertising contents are requested to be presented much often than the other clients, as for instance, the advertising pictures are shown in preference to others or the time of length allotted for advertisement is elongated.

The manner of presentation includes the simultaneous presentation of a plurality of contents in the divisional areas of the screen, and the simultaneous presentation of a plurality of contents in the overlapping condition in the screen.

Still pictures and moving pictures may be presented with or without letters, which letters may be made to flow laterally or longitudinally.

Emergency notices may be put in the screen to intercept the content now appearing in the display. The speaker 26 may be used to produce music sound or voice.

The display 10 can be laid or stand upright, and the presentation of contents can be changed in direction accordingly.

The clients A1 retrieve which vacancies available in the electronic poster by watching the home pages of the electronic poster system, requesting the advertisement agents A2 to make a contract with the server while indicating the place and time zone selected for advertisement.

As for preparation of commercial pictures, the clients A1 prepare advertisement pictures, or otherwise, they ask the advertisement agents A2 to prepare such advertisement pictures. Auction systems may be built in the home pages so that the clients A1 can send in direct orders to the advertisement production companies A3 for a favorable contract.

Preparation and renewal of commercial electronic posters can be made via the network 30, and therefore, divisional works can be allotted to different advertisement production companies A3 which may be selected from nationwide choices.

Advertisement pictures can be prepared in the same way as home pages, and therefore, the manufacturing cost can be drastically reduced. Also, advantageously the existing home pages can be linked so that they may be presented in the display of the electronic poster system.

As for the charge-free information service to the audience, the news, the weather forecast, the prices of stocks, the foreign exchange rates, the horse racing and such like are offered in the hope of improving the audience rating or viewership. Such contents on display are not commercial. In spite of the non-commercial use, the clients pay to the contents suppliers A4 the extra advertisement expense, which is assumed to be involved for gathering more people in front of the display than would come if commercial contents were presented alone.

As for the extra information service, extra authorized members can be informed of the time table of transportation, the places to be visited for sightseeing, the names of restaurants for epicures, the guidance for events and such like at their request for charges, , which may be collected by the clients and paid to the content suppliers.

The materials offered to such extra members can be printed at their expense. They can put the money in the coin box 24. Otherwise, the mobile phone communication company may take the role of collecting money from extra members for the content supply company.

Assuming that a person wants to know the way to his destination, he links his mobile phone 80 to the site of the electronic poster in the internet, making the required menu appear in the screen of the mobile phone 80. Then, he inputs the identification number of the display 10 along with other required pieces of information of his destination such as: the telephone number; zip number; address; names of place, building, company or person; or latitude and longitude. In response to the entry, the map and route to the destination along with the length of time required to reach the destination are given on the display 10.

A required copy of the map and route can be obtained from the printer 22 by clicking the indication, "PRINT" in the menu.

When the keyboard entry unit 21 or the remote control unit 25 is used, the menu for a guide to the destination is made to appear on the display 10.

When an authorized user wishes to have a private service from the electronic poster system, he sends an e-mail to the server 40 from his mobile phone 80, and then, the reply from the server 40 is presented on the display 10. Thus, the electronic poster system can be used as a message board or a classified three-line advertisement.

When a mobile phone terminal or a PDA terminal is loaded with pieces of visual information, the so downloaded pictures can be presented on the display.

When a user reserves a movie ticket with his mobile phone 80, he can watch the movie preview on the screen of the display and enjoy the powerful and vivid presentation.

As for an advertisement support service offered to the government or local governments, these organizations can use the electronic advertisement system for the sake of providing public advertisements or announcements. Pieces of urgent or emergent information can be interleaved or overlapped with the advertisement now on display.

### Industrial Applicability:

As is apparent from the above, in an electronic poster system according to the present invention, the display of the computer-aided control is connected to the server via the network, thereby allowing the display to be used as a mass media for advertisement, which can provide a lot of people with a variety of contents in succession.

The display is supplied with digital contents, which can be prepared easily in the same way as homepages, and therefore, the time and cost involved for manufacturing commercial posters can be greatly reduced.

The time and cost involved for printing and applying printed materials to selected places as is the case with conventional posters can be totally saved.

The time involved for planning and publishing can be substantially reduced, and therefore, advertisements can be provided at just the right time.

Advertising clients can contact a lot of advertisement production companies via the network, and therefore, the number of days involved for manufacturing required advertising materials can be reduced to minimum by dividing the required work and by allotting divisions of the work to a plurality of production companies. Also, the clients can widely invite a plan for contents from production companies and let them compete, thereby acquiring the high-quality contents and saving the manufacturing costs.

A lot of advertisements can be presented ceaselessly, and therefore, people are liable to be attracted to the varying presentation for a long time.

Same advertisements can be easily changed partly for instance, in background so that the audience may be kept to be attracted to the same advertisement for a long time.

The technique which is called "effect" can be used in changing the content, thereby attracting the audience even more.

Simultaneous presentations of different contents can be performed by dividing the screen into a plurality of divisional sections each allotted to a different content or by overlapping a plurality of contents. The simultaneous presentation of different contents has the effect of increasing the number of individuals watching the display, and accordingly improving the audience rating or viewership. A television opaque projector (abbreviated as "telop") may be used to allow news to override the advertisement presentation, thereby inducing more people to gather around the display.

Different contents can be allotted to different displays. Every local railway station may have a display installed for presenting contents, which are supposed to be favorite to passengers getting on and off at the particular local station.

Contents to be shown can be scheduled to meet the timetable at each and every local station, thereby extending or shortening the length of time for presentation in compliance with the long or short waiting time. Specifically contents are changed at elongated interval for the time zone for which passengers wait a relatively long time before getting on the train whereas contents are changed at shortened interval for the time zone for which passengers wait a relatively short time before getting on the train.

With the present invention, users can access to their favorite contents at their request. Therefore, it is possible to present contents according to an individual user's preference.

The content shown in the display can be printed, and therefore, a user can have printed copies of the map or timetable which he requests the server to show in the display. Then, he can have the printed copies with him while walking and searching for his destination.

The content offered by an authorized user can be shown in the display, thus permitting different private uses of electronic poster by people, as for instance, a notice from a block association or a notice for lost pet and such likes may be presented. The electronic poster can be used as a message board or a classified three-line advertisement.

Vocal message can be distributed to users' terminals via the electronic poster system. Usually no vocal messages are permitted in advertising, but vocal messages can be sent to mobile phones when occasions demand with the present invention. Thus, for instance, users can watch the content presented on the display while hearing music or vocal messages, thereby enhancing impressions and attraction of the content being watched.

The electronic poster system of the present invention has a cost calculating means, and therefore, it can be utilized as a marketing tool of varieties of commercial contents.

## Claims

1. An electronic poster system comprising: displays placed at different selected places and connected to servers for distributing a variety of contents to such selected places via an associated network; and time-division presentation control with which each of the displays is equipped for permitting a plurality of contents to be shown on the display sequentially according to a given time schedule, thereby providing an advertising mass media for showing a variety of contents to a lot of people.

2. An electronic poster system according to claim 1 wherein it further comprises screen division-and-presentation means, thereby permitting the simultaneous presentation of different contents on the screen.

3. An electronic poster system according to claim 1 wherein it further comprises picture-overlapping means, thereby permitting the simultaneous presentation of different contents on the screen.

4. An electronic poster system according to claim 1 wherein it further comprises means for allotting selected contents to selected displays for presentation.

5. An electronic poster system according to claim 1 wherein it further comprises means for permitting each of selected displays to show selected contents according to a given schedule.

6. An electronic poster system according to claim 1 wherein it further comprises means for permitting any individual of the audience to have an access to any content selected by him for presentation on the screen.

7. An electronic poster system according to claim 1 wherein it further comprises means for printing the content shown on the screen.

8. An electronic poster system according to claim 1 wherein it further comprises means for showing the content required by any individual of the audience.

9. An electronic poster system according to claim 1 wherein it further comprises means for distributing sound, pictures and letters to the displays of the individual terminals.

10. An electronic poster system according to claim 1 wherein it further comprises cost calculating means.
